# EUROPÄISCHE PATENTSCHRIFT

(11) **EP 0 510 717 B1**
(45) Veröffentlichungstag und Bekanntmachung des Hinweises auf die Patenterteilung: **12.07.1995**
(21) Anmeldenummer: 92107172.6
(22) Anmeldetag: 27.04.1992
(51) Int. Cl.: B01D 17/032

(54) **Ölskimmer**
Oil skimmer
Dispositif d'écumage

(30) Priorität: 25.04.1991 DE 4113593
(43) Veröffentlichungstag der Anmeldung: 28.10.1992
(73) Patentinhaber: UHL GmbH, D-87459 Pfronten (DE)
(72) Erfinder: Uhl, Alfred, D-8962 Pfronten-Weissbach (DE)
(74) Vertreter: Alber, Norbert

(56) Entgegenhaltungen:
- AU-B- 519 301
- US-A- 4 582 604
- US-A- 4 652 372
- MACHINES PRODUCTION Nr. 291, 13. Mai 1981, BOULOGNE,FRANCE Seite 18; 'SEPARAREUR D'HUILE POUR LIQUIDES DE COUPE'

## Beschreibung

Die Erfindung betrifft eine Vorrichtung für das Entfernen von Öl von der Oberfläche schwererer, meist wassermischbarer Flüssigkeiten. Dieses Problem taucht - meist für große Ölmengen - im Umweltschutzbereich auf, jedoch ebenso im wesentlich kleineren Maßstab an den Werkzeugmaschinen der Industrie:
Bei der spanenden Bearbeitung werden Kühl-Schmier-Flüssigkeiten über die Zerspanungsstelle geleitet, die anschließend gesammelt und möglichst wiederverwendet werden sollen. Diese Kühl-Schmier-Flüssigkeiten werden jedoch unerwünschterweise mit Öl versetzt, welches z.B.aus der Leckage der Hydraulikkreisläufe herrührt. Da diese Kühl-Schmier-Flüssigkeiten wiederverwendet und am besten sogar im Kreislauf geführt werden sollen, muß vorher dieses Öl weitestgehend entfernt werden, da es die Eigenschaften des Kühl-Schmier-Stoffes auf unerwünschte Art verändert, beispielsweise aufgrund der Säurebestandteile Korrosion hervorruft.

Während große Industrieunternehmen zu diesem Zweck eine zentrale Sammelung und Reinigung dieser Kühl-Schmier-Flüssigkeiten vornehmen, wozu ein erheblicher baulicher und maschineller Aufwand notwendig ist, benötigen kleinere Firmen dagegen einen wirksamen, einfachen und kostengünstigen Ölskimmer, der im Sammelbehälter an der Werkzeugmaschine von der Oberfläche der Kühl-Schmier-Flüssigkeit das Öl entfernt.

Zu diesem Zweck sind beispielsweise im Sammelbehälter schwimmende Scheiben-Skimmer bekannt, bei denen eine dünne Scheibe um eine waagrechte Achse drehend rotiert und dabei teilweise in die Flüssigkeit eintaucht. Da das Öl stärker an der Außenfläche der Scheibe haftet als die restlichen Bestandteile der Flüssigkeit, wird es durch die Drehung der Scheibe aus der Flüssigkeit herausgehoben, während die restlichen Bestandteile der Flüssigkeit schnell ablaufen. Vor dem Wiedereintauchen der Scheibe läuft diese an einem Abstreifer vorbei, der das anhaftende Öl abnimmt und über eine Ableitung entfernt.

Der Hauptnachteil derartiger schwimmender Scheiben-Skimmer besteht darin, daß der Sammelbehälter, in dem dieses Gerät eingesetzt werden soll, eine ausreichend große Oberfläche besitzen muß, die außerdem von oben gut zugänglich sein muß, um die Funktion des Skimmers zu überprüfen bzw. diesen zu warten.

In den meisten Fällen sind die Sammelbehälter jedoch teilweise in die Werkzeugmaschine integriert und mit einer nur geringen Oberfläche ausgebildet, so daß eine Zugangsfläche von teilweise unter einem dm² vorhanden ist.

Ein weiterer Nachteil besteht darin, daß in dem Sammelbehälter auch Metallspäne angeschwemmt werden, die sich mit der Zeit am Schwimmer des Scheiben-Skimmers anlagern, worauf dessen Eintauchtiefe verändert wird bzw. der Schwimmer und damit der gesamte Skimmer vollständig absinken kann. Aufgrund des wechselnden Füllstandes des Vorratsbehälters ist jedoch eine mechanisch feste Anordung eines solchen Scheiben-Skimmers im Vorratsbehälter nicht möglich.

Aus der US-A-4 652 372 ist ein gattungsgemäßer Ölskimmer bekannt, bei dem zur Aufnahme des Öles ein endlos umlaufendes aus oliofilem Material bestehendes Förderband durch einen Flüssigkeiten enthaltenden Behälter transportiert wird.

Dazu umläuft das Endlosband eine in dem Flüssigkeitsbehälter untergebrachte Walze. Nahezu vertikal aufsteigend von dieser Walze bewegt sich das Endlosband über mehrere, außerhalb des Flüssigkeitsbehälters angeordnete Rollen die gleichzeitig als Abstreifer dienen und von denen eine als Antriebselement ausgebildet ist. Nach dem Abstreifen des Öles durch die Rollen wird das Endlosband vertikal nach unten über die Walze führend durch die Öl enthaltende Flüssigkeit bewegt.

Es ist die Aufgabe der vorliegenden Erfindung, die Nachteile des Standes der Technik zu vermeiden und insbesondere einen Ölskimmer zu schaffen, der mit geringem baulichen Aufwand, geringer nach oben offener Zugangsfläche im Vorratsbehälter und bei sich änderndem Füllstand aufschwimmendes Öl von der darunterliegenden Flüssigkeit abnimmt.

Diese Aufgabe ist durch die Merkmale des Anspruches 1 gelöst. Vorteilhafte Ausführungsformen ergeben sich aus den Unteransprüchen.

Dadurch, daß das Förderelement, an welchem das abzunehmende Öl anhaftet, nicht eine feste Scheibe ist, die auf der Antriebsachse gelagert ist, sondern ein endloses, flexibles Element, welches von seinem Antriebselement in die Flüssigkeit herabhängt, kann das Antriebselement und damit auch die Achse ausreichend weit über der Kühl-Schmier-Flüssigkeit angeordnet werden und das Förderelement so lange gewählt werden, daß es auch bei niedrigem Füllstand im Vorratsbehälter noch die Flüssigkeit erreicht. Der gesamte Antrieb für das Förderelement kann sich damit oberhalb und außerhalb des Vorratsbehälters befinden, in dessen oberer Abdeckung eine kleine Öffnung ausreicht, durch welche das Förderelement in die Flüssigkeit hineinhängt.

Das Antriebselement muß geeignete Mitnehmer aufweisen, um das Förderelement trotz des am aufsteigenden Trumes anhaftenden Öles und des durch einen Abstreifer erzeugten Widerstandes umlaufen zu lassen.

Der Abstreifvorgang ist um so effizienter, je besser der Abstreifer am Förderelement anliegen kann. Aus diesem Grunde sind Förderelemente mit einem gleichmäßigen, beispielsweise runden, geschlossenen Außendurchmesser besser geeignet als eine normale Kette, bei der die einzelnen Glieder jeweils um 90° zueinander versetzt angeordnet sind und auch eine geringere Oberfläche aufweisen.

Andererseits ist die Förderleistung um so höher, wenn das Förderelement an seiner Außenfläche quer zu seiner Laufrichtung eine Vielzahl von Vorsprüngen oder Vertiefungen aufweist, wodurch eine größere Ölmenge am Förderelement anhaften kann und dessen Ablauf erschwert wird.

Dies ist auch deshalb sinnvoll, da vom Austreten des aufsteigenden Trumes des Förderelementes bis zum Erreichen des Abstreifers eine ausreichende Strecke bzw. Zeitdauer verstreichen muß, die notwendig ist, um die übrigen Bestandteile der Flüssigkeit vom Förderelement nach unten in den Behälter zurücklaufen zu lassen. Als gutes Förderelement hat sich eine aus Metall gefertigte in Querrichtung nicht komprimierbare Kette erwiesen, die einen runden im wesentlichen geschlossenen Außendurchmesser besitzt und dennoch so flexibel ist, daß eine Biegung der Kette bis herab zum etwa 5-fachen des Durchmessers der Kette möglich ist, wodurch geringe Abmessungen für die Antriebselemente etc. möglich werden. Die einzelnen, auf der Außenseite ringförmigen Glieder der Kette sind durch innenliegende Verbindungselemente miteinander verbunden. Die Kette ist aus vernickeltem Messing hergestellt und die Außenflächen der Kette sind in der Abwicklung wellenförmig. Dadurch ist die Länge der zwischen den einzelnen Gliedern quer zur Laufrichtung der Kette verlaufenden Zwischenräume größer als bei zylindrischer Gestaltung der Außenflächen der einzelnen Elemente. Die einzelnen Glieder zueinander besitzen in Längsrichtung der Kette ein gewisses Spiel, und werden durch das Eigengewicht der Kette beim senkrechten Herabhängen maximal auseinander gezogen. Dadurch entstehen Abstände von ca. 0,5 mm zwischen den einzelnen Gliedern. In diesen über den gesamten Umfang der Kette umlaufenden Öffnungen haftet das Öl ausreichend stark, so daß es ohne herabzulaufen den ca. 0,5 m höher angeordneten Abstreifer erreicht, der vor dem als Antriebselement dienenden, etwa waagrecht liegenden Zylinder angeordnet ist, über dessen Oberseite die Kette in einer umlaufenden Nut geführt ist.

Eine ausreichende Reibung für den Antrieb der Kette ist dadurch gegeben, daß die Nut keilförmig ausgebildet ist, so daß die Kette innerhalb der Nut an deren Seitenwänden anliegt, nicht jedoch deren Boden erreicht.

Eine Neigung der beiden Wände der Nut gegeneinander von 7° bis 15°, vorzugsweise von etwa 10°, reicht aus, um einerseits die Kette aufgrund ihres Eigengewichtes bei einer Gesamtlänge von ca. 1 m ausreichend fest in die Nut zu drücken, so daß ein Antrieb der Kette sichergestellt ist, andererseits jedoch ein Verklemmen der Kette in der Nut am Auslaufende, also am Beginn des ablaufenden Trumes der Kette, zu vermeiden.

Die Kette kann auch aus anderen Materialien, beispielsweise Kunststoff, bestehen, sofern zu diesem Material die Adhäsion des aufzunehmenden Öles ebenso groß ist wie gegenüber Metall. Eine Verwendung korrodierender Metalle für die Kette ist aufgrund der Säurebestandteile des Öles nicht empfehlenswert.

Ebenso sollte die Kette aus einem stabilen, in ihrer Querschnittsform weitgehend unelastischem Material bestehen. Versuche mit komprimierbaren Kunststoffbändern und Schläuchen brachten weniger gute Ergebnisse, wenn zum Entfernen des Öls von solchen Förderelementen diese zusammengedrückt werden müssen. Dabei treten sehr schnell Ermüdungserscheinungen und Brüche im Material des Förderelementes auf, was dessen Funktion beeinträchtigt und zusätzlich die Flüssigkeit im Behälter verunreinigt.

Um die Reibung zwischen Antriebselement und Förderelement nicht unnötig zu reduzieren, ist der Abstreifer am aufsteigenden Trum des Förderelementes, also der Kette, vor dem Antriebselement angeordnet. Vorzugsweise ist in diesem Bereich das Förderelement schräg ansteigend mit Hilfe von Umlenkelementen geführt. Bei den Umlenkelementen kann es sich um Bogensegmente handeln, die wiederum eine Nut an ihrer Außenfläche aufweisen, in der die Kette geführt ist. Durch ein erstes, innerhalb der umlaufenden Kette liegendes Umlenkelement wird deren ansteigendes, frei herabhängendes Trum weiter außen gehalten, als es dem Antriebselement entsprechen würde, während ein zweites Umlenkelement, welches außerhalb der umlaufenden Kette angeordnet ist, diese nach innen drückt. Zwischen den beiden Umlenkelementen ist dadurch eine Schrägführung oder gar eine Waagrechtführung des Förderelementes gegeben.

Als Abstreifer kann dabei eine Gummilippe dienen, die gegen eines der Umlenkelemente drückt und eine Aussparung aufweist, die dem aus der Nut des Umlenkelementes herausragenden Teil des Querschnittes des Förderelementes entspricht. Diese Gummilippe ist über ein Befestigungselement - ebenso wie die Befestigungselemente und die Achse des Antriebselementes selbst - an der Grundplatte eines Gehäuses befestigt bzw. gelagert. Die Gummilippe muß ausreichend elastisch sein, um an dem Förderelement anhaftende Feststoffe ohne Beschädigung hindurchlassen zu können.

Andererseits muß diese Gummilippe eine ausreichende Verschleißfestigkeit aufweisen, um ein ständiges Wechseln der Lippe zu vermeiden. Bei dieser Konstellation dient auch diejenige Stirnfläche des Umlenkelementes, die von der Kette als erstes erreicht wird, selbst als Abstreifer, wenngleich aufgrund der Schrägführung der Kette in diesem Bereich und der Lage dieses dem Abstreifer zugeordneten Umlenkelementes oberhalb der Kette sich das meiste Öl an der Unterseite des Förderelementes und damit im Bereich der Gummilippe befinden wird.

Dennoch wirkt bereits das in Laufrichtung als erstes angeordnete, innenliegende Umlenkelement ebenfalls als Abstreifer, so daß dessen Unterkante schräg von der Kette nach unten abfallend ausgebildet sein sollte, so daß sich das abgestreifte Öl entlang dieser Unterkante fortbewegt und an dessen Ende abtropft. Dieses Ende sollte sich deshalb noch oberhalb der Rinne befinden, die zur Ableitung des von den Abstreifern abtropfenden Öles dient.

Die Querschnittsform der Nut zumindest in demjenigen Umlenkelement, welches dem Abstreifer, also der Gummilippe, gegenüberliegt, sollte dabei dem Außendurchmesser der Kette weitgehend angepaßt sein, um auch ein Abstreifen des Öles von der Oberseite der Kette zu bewirken. Dagegen ist dies bei der Nut des ersten Umlenkelementes nicht notwendig, an dem der Abstreifeffekt möglichst gering sein sollte.

Da das Förderelement durch Verklemmenm, Verhaken oder Ähnlichem blockiert werden kann, und der bauliche Aufwand für den Antrieb den Förderelementes möglichst gering zu halten ist, ist der die Kette antreibende Zylinder von einem getakteten Wechselstrommotor ohne eine dazwischen angeordnete Kupplung angetrieben, welcher ein Blockieren des Antriebselementes ohne Beschädigungen verkraften kann.

Vorteilhafterweise besitzt das Antriebselement einen Durchmesser, der dem 10- bis 20-fachen, am besten dem 15-fachen des Durchmessers des Förderelementes beträgt, wobei als Durchmesser der Abstand zwischen den einander gegenüberliegenden Anlagepunkten der Kette an den Seitenflächen der Nuten des Zylinders gemeint ist. Der antreibende Zylinder wird dabei mit etwa 30 Umdrehungen pro Minute angetrieben, so daß sich bei einem Durchmesser des antreibenden Zylinders von 50 bis 60 mm eine Geschwindigkeit der Kette von etwa 5 Meter pro Minute ergibt. Bei einem Durchmesser der Kette von etwa 4 mm kann auf diese Art und Weise etwa 1 Liter Öl pro Stunde aus dem Vorratsbehälter abgenommen werden, wobei das Förderelement nicht fortwährend in Betrieb ist, sondern mittels eines Reglers das Verhältnis von Förderzeit zu Stillstandszeit einstellbar ist. Eine Förderperiode bzw. Stillstandsperiode sollte dabei im Bereich von einigen Minuten liegen.

Während der Förderdauer wird das im Bereich der hineinhängenden Kette auf der Oberfläche der Flüssigkeit schwimmende Öl aufgrund seines inneren Zusammenhaltes und der Abförderung durch die Kette in einem gewissen Bereich zur Kette hingezogen. Bei zu großem Abstand zur Kette ist eine solche Bewegung in Richtung der Kette nicht mehr möglich. Dies geschieht durch selbsttätige Verteilung des Öles auf der Oberfläche während der Stillstandszeiten. Ist die Ölmenge auf der Oberfläche des Behälters relativ groß, also beispielsweise mehrere Millimeter dick, so kann auf Stillstandszeiten ganz verzichtet werden und dadurch die Förderleistung erhöht werden.

Eine weitere Erhöhung der Förderleistung tritt ein, wenn mehrere Ketten im Abstand nebeneinander geführt werden, wobei wenigstens die aufsteigenden Trume der Ketten parallel zueinander und in geringem Abstand geführt werden sollten. Am einfachsten ist dies möglich, wenn die gesamten Ketten nebeneinander geführt und durch ein gemeinsames, zylindrisches Antriebselement angetrieben werden, indem parallel nebeneinander in der Mantelfläche umlaufenden Nuten die einzelnen Ketten aufnehmen und antreiben. Der Abstand der aufsteigenden Trume der Ketten sollte dabei im Bereich von etwa 3 mm liegen, da sich gezeigt hat, daß dieser Abstand gering genug ist, um einen zwischen den einzelnen Ketten durchgehenden, diese miteinander verklebenden Ölfilm zu schaffen, wodurch eine Förderleistung erzielt wird, die wesentlich höher liegt als die durch eine gleiche Anzahl im großen Abstand zueinander betriebener Ketten.

In der Schlaufe, die das untere Ende des Förderelementes, also der Kette, bildet und sich in der Flüssigkeit befindet, kann ein Propeller geführt werden, der unterhalb der Oberfläche der Flüssigkeit eine Strömung erzeugt, die eine schnellere Bewegung auch des Öles an der Oberfläche herbeiführt und damit dem Förderelement ständig Öl zuführt. Ein solcher Propeller wird am einfachsten dadurch geschaffen, daß in dieser Schlaufe ein Rad liegt, welches vorzugsweise durch eine entsprechende Nut ausreichend sicher in der Schlaufe sitzt und durch das Umlaufen des Förderelementes angetrieben wird, wobei das Rad von der einen Stirnseite zur anderen im wesentlichen durchgängig hohl ausgebildet ist und sich in diesem Bereich schräg zu den Stirnflächen verlaufende Förderbleche etc. befinden, die bei Drehung des Rades eine entsprechende Strömung in Richtung der Längsachse des Rades in der Flüssigkeit erzeugt.

Um das Rad in der Schlaufe zu stabilisieren, kann ein von der Achse des Rades herabhängendes Gewicht vorgesehen sein, welches drehbar gegenüber dem Rad gelagert ist und aufgrund des tiefliegenden Schwerpunktes das Rad sicher in der Schlaufe hält. Die Gestaltung der Nuten des Rades kann dabei derjenigen des Antriebselementes entsprechen.

Ein ausreichend stabiler und dennoch flexibler Schlauch, beispielsweise aus Kunststoff, welcher quer zur Laufrichtung Nuten aufweist, könnte ebenso verwendet werden, wenn dieser Kunststoff eine ausreichend große Haftung für das aufzunehmende Öl bietet.

Für andere Anwendungsfälle mit größeren Oberflächen kann es sich anbieten, das Förderelement, beispielsweise durch entsprechende Gestaltung der innenliegenden Teile der Kette bzw. des Schlauches, so leicht zu gestalten, daß es auf der Flüssigkeit schwimmt. Dadurch können öltragende Bereiche der Flüssigkeit gegenüber solchen abgegrenzt werden, auf deren Oberfläche sich kein Öl befindet.Ein anderen Zweck dieser Ausführungsform liegt darin, daß hierdurch das Förderelement mit einem größeren Bereich der Oberfläche der Flüssigkeit in Verbindung kommt und dadurch auf das Erzeugen einer Strömung in der Flüssigkeit verzichtet werden kann.

Alle mechanischen Komponenten des Ölskimmers mit Ausnahme eines evtl. in der unteren Schlaufe laufenden Rades sind auf der Grundplatte eines Gehäuses montiert, welches - beispielsweise mit Hilfe einfach zu bedienender Klemmelemente - an einer senkrechten Stange in der Höhe verstellt und befestigt werden kann. Am unteren Ende der Stange weist diese vorzugsweise einen magnetischen Fuß mit einer die Standsicherheit gewährleistenden Auflagefläche auf, mit deren Hilfe der Ölskimmer auf der - meist metallischen - oberen Abdeckung des Sammelbehälters befestigt werden kann. Für das Einführen des Förderelementes in den Sammelbehälter reicht dann eine Öffnung von 5 bis 6 cm Durchmesser aus, wobei der gegenseitige Abstand des aufsteigenden und des ablaufenden Trumes durch die Postitionierung der Umlenkelemente auf der Grundplatte des Skimmers festgelegt wird, jedoch nicht kleiner sein sollte als der minimal mögliche Biegedurchmesser des Förderelementes.

Als Abstreifer kann anstelle einer Gummilippe, die einem der Umlenkelemente gegenüberliegt, auch ein den Umfang des Förderelementes vollständig umschließendes Element verwendet werden, welches dann zwischen den beiden Umlenkelementen angeordnet werden muß. Hierfür sind beispielsweise Tüllen mit ringförmigem bzw. auf die Gestalt des Außenumfanges des Förderelementes angepaßtem Innenquerschnitt geeignet, wie sie für Kabeldurchführungen durch feste Wände etc. als Scheuerschutz verwendet werden.

Eine Ausführungsform gemäß der Erfindung ist beispielhaft anhand der Zeichnungen näher erläutert. Es zeigen
- Figur 1 :: die oberhalb des Flüssigkeitsspiegels angeordne ten Teile des Ölskimmers,
- Figur 2 :: die unterhalb des Flüssigkeitsspiegels angeordneten Teile,
- Figur 3 :: eine Detaildarstellung der Kette.

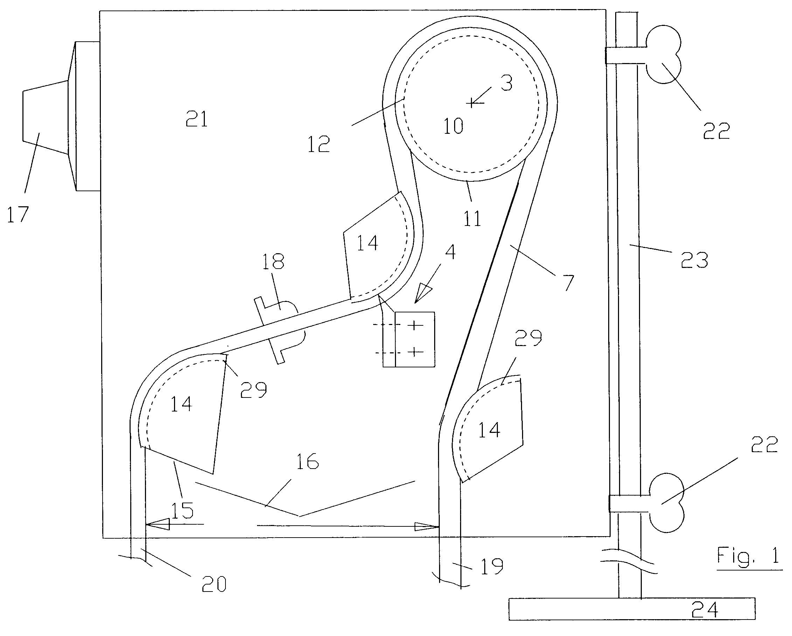

Figur 1 zeigt alle oberhalb des Flüssigkeitsspiegels angeordneten Bauteile des Ölskimmers: Auf der Grundplatte 21 ist der Zylinder 10 montiert, der drehend von dem dahinter angeordneten, nicht sichtbaren Motor angetrieben wird und als Antriebselement für die darübergelegte Kette 7 dient. Diese wird in einer Nut 11 geführt, die sich in der Mantelfläche des Zylinders 10 befindet.

In der Darstellung der Figur 1 dreht sich im Arbeitseinsatz der Zylinder 10 und damit die Kette 7 im Uhrzeigersinn, so daß in der Darstellung links das aufsteigende Trum 20 und rechts das ablaufende Trum 19 der Kette 7 zu sehen sind.

In Laufrichtung der Kette befinden sich ca. 10 bis 20 cm vor dem antreibenden Zylinder 10 ein erstes Umlenkelement 14 innerhalb der Kette, welche die Kette 7 weiter nach außen drückt als es der Lage des Zylinders 10 entsprechen würde. Im weiteren Verlauf der Kette 7 befindet sich dann, ebenfalls in Laufrichtung noch vor dem Zylinder 10, ein weiteres Umlenkelement 14, diesmal jedoch außerhalb der Kette, welches die Kette von der Anlageposition des ersten Umlenkelementes aus nach innen drückt. Dadurch wird die Kette 7 im Bereich zwischen den beiden Umlenkelementes aus der Senkrechten in eine schräg ansteigende, maximal waagerechte Lage gebracht.

Die Umlenkelemente sind auf der Grundplatte 21 befestigt und besitzen an den Außenflächen, an denen die Kette 7 entlanggleitet, eine bogenförmige Gestalt, in der Nuten 29 zur besserern Führung der Kette 7 dienen. Die Nut 29 des zweiten, weiter oben liegenden Umlenkelementes 14 ist dabei möglichst gut an die Außenkontur der Kette 7 angepaßt und wirkt für diesen Teil des Umfanges der Kette 7 als Abstreifer.

Gegen dieses zweite Umlenkelement drückt der Abstreifer 4, bestehend aus einer Gummilippe, die mit einem Halteelement fest verbunden ist, welches wiederum auf der Grundplatte festgeschraubt ist. Die Gummilippe besitzt eine Ausnehmung entsprechend dem aus der Nut des zweiten Umlenkelementes 14 hervoragenden Querschnittes der Kette 7.

Entlang der Gummilippe fließt das abgestreifte Öl ab und tropft in die darunter befindliche Rinne 16, über welche das Öl in einen Ölsammelbehälter, der in Figur 1 nicht dargestellt ist und außerhalb des Ölskimmers aufgestellt sein kann, ab. Auch die Unterkante 15 des ersten Umlenkelementes 14 strebt von der in der Nähe der Kette 7 liegenden Seite aus schräg nach unten ab, so daß das hier von der Kette 7 abgenommene Öl entlang dieser Unterkante 15 abläuft, und von deren tieferliegenden, von der Kette 7 entfernten Ende aus ebenfalls in die Rinne 16 abtropft.

In Figur 1 ist ferner eine weitere Lösung einer Abstreifers dargestellt in Form einer zwischen den beiden Umlenkelementen 14 angeordneten Tülle 18, wie sie beispielsweise für Kabeldurchführungen durch Wände und Platten etc. verwendet wird, die üblicherweise aus Gummi oder Kunststoff bestehen. Diese Tülle 18 besitzt einen Durchlaß mit einem Querschnitt entsprechend dem Außenquerschnitt der Kette 7, wodurch deren gesamter Umfang durch die Tülle 18 abgestreift wird.

Um den Abstand zwischen dem aufsteigenden und dem ablaufenden Trum der Kette 7 gering zu halten, so daß bereits eine kleine Öffnung in der oberen Abdeckung des Behälters für die Flüssigkeit ausreicht zum Hindurchführen der Kette 7, ist durch ein weiteres, drittes Umlenkelement 14, welches am ablaufenden Trum 19 außerhalb der Kette angeordnet ist, diese in Richtung auf das aufsteigende Trum abgelenkt, um deren Abstand zu vermindern.

Obwohl aus Funktionsgründen lediglich beim zweiten Umlenkelement 14 eine Nutenform erforderlich ist, die im wesentlichen der Umfangsform der Kette 7 entspricht, dies dagegen beim ersten Umlenkelement gerade nicht der Fall ist, so kann doch entweder das dritte Umlenkelement - abgesehen von der Positionierung - mit dem ersten oder zweiten Umlenkelement identisch sein, um als Ersatzteil hierfür zu dienen, bzw. es können bei entsprechender Montage alle drei Umlenkelemente 14 identisch ausgebildet sein.

In Figur 1 ist ferner der Regler 17 eingezeichnet, mit dessen Hilfe das Verhältnis von Betriebszeiten und Ruhezeiten des Skimmers eingestellt werden kann, da ein pausenloser Betrieb des Skimmers nur bei relativ großen anfallenden Ölmengen sinnvoll ist.

Ferner ist die senkrechte Stange 23 zu erkennen, an welcher die Grundplatte 21 mit Hilfe der Klemmelemente 22 in der Höhe verstellt und befestigt werden kann. Am unteren Ende der senkrechten Stange ist der plattenförmige, magnetische Fuß 24 dargestellt.

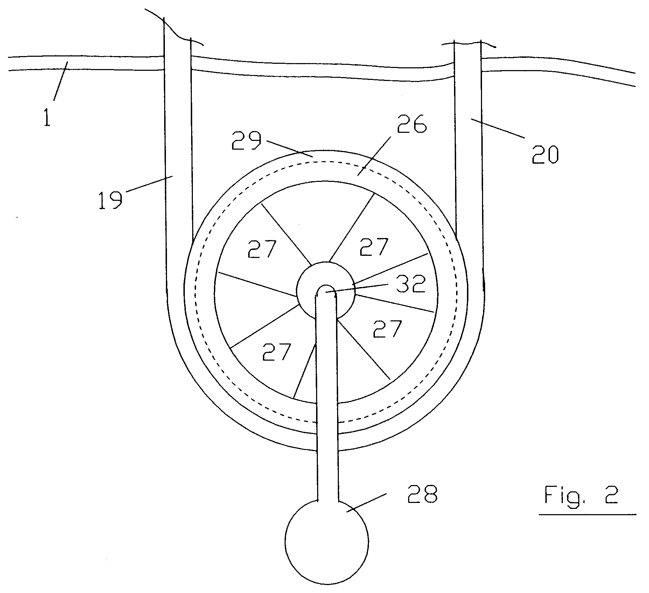

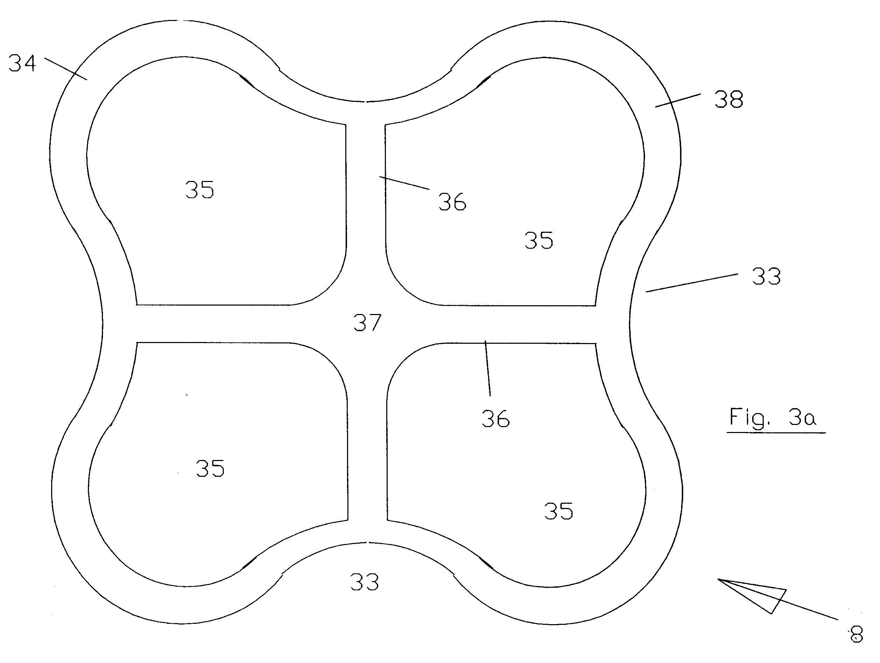

Figur 2 zeigt die unterhalb des Flüssigkeitsspiegels angeordneten Teile des Ölskimmers, nämlich die durch das untere Ende der umlaufenden Kette 7 gebildete Schlaufe 25. In dieser befindet sich das Rad 26, welches ebenfalls wiederum eine Nut 29, in ihren Abmessungen entsprechend der Nut 11 des Zylinders 10, besitzt, wodurch das Rad 26 sicher in der Schlaufe 25 der Kette 7 geführt wird.

Zur weiteren Stabilisierung ist in der Symmetrieachse 32 des Rades 26 ein Gewicht 28 drehbar gelagert, welches sich unterhalb des Rades 26 befindet und durch die Schwerpunktverlagerung der Gesamteinheit nach unten dessen Lage in der Schlaufe 25 weiter stabilisiert.

In Figur 2 ist ferner der freie Druchgang von einer Stirnseite des Rades 26 zur anderen dargestellt. Zwischen der Achse 32 und dem ringförmigen Umfang des Rades 26 befinden sich Leitbleche 27, die gegenüber der Stirnfläche des Rades 26 übereinstimmend schräg gestellt sind und dadurch bei Drehung des Rades 26 eine Strömung entlang der Längsachse des Rades 26 bewirken. Der Antrieb des Rades 26 erfolgt über den Umlauf der Kette 7.

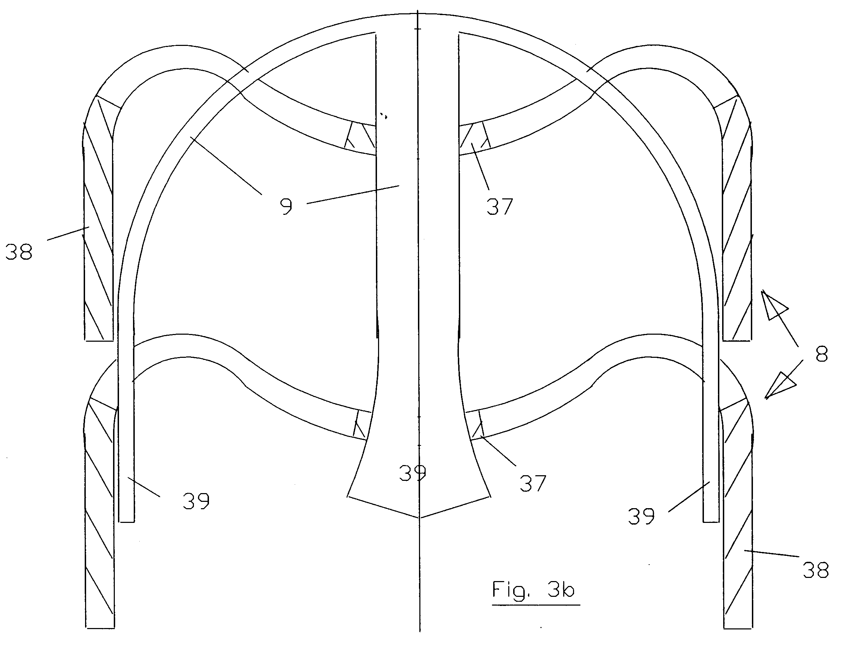

Figur 3 zeigt Einzelheiten hinsichtlich der Gestaltung der metallenen, runden Kette 7:
In Figur 3a ist zur besseren Veranschaulichung eines der Glieder 8 in der Abwicklung in eine Ebene dargestellt: In dieser Form könnten die Glieder 8 zunächst aus einem Blech ausgestanzt und anschließend zu der topfförmigen Gestalt, wie aus Figur 3b ersichtlich, gebogen werden.

In Figur 3a ist zu erkennen, daß die Grundform der Glieder aus vier symmetrischen Vierteln besteht. Die Außenkontur ist etwa quadratisch mit Einbuchtungen 33 in der Mitte der Seiten des Quadrates, wobei die Ecken des Quadrates stark abgerundet sind und zusammen mit den ebenfalls gerundeten Einbuchtungen 33 eine wellenförmig umlaufende Linie ergeben, bestehend aus vier gerundeten Vorsprünge 34, die den Ecken der quadratischen Grundstruktur entsprechen, und den jeweils symmetrisch dazwischen angeordneten Einbuchtungen 33 die in etwa den gleichen Rundungsradius besitzen.

Innerhalb dieser Außenkontur sind vier Ausnehmungen 35 so angeordnet, daß von dem tiefsten Punkt der Einbuchtungen 33 zur jeweils gegenüberliegenden Einbuchtung 33 ein Steg 36 stehenbleibt, wobei sich die beiden Stege im rechten Winkel kreuzen und im Kreuzungspunkt eine Mittelplatte 37 bestehen bleibt, die durch Abrundung der Übergänge zwischen den einzelnene Stegen größer ausgebildet ist als bei einer reinen Kreuzung der Stege 36. Die Breite der Stege 36 beträgt etwa 1/4 bis 1/5 des Durchmessers der gesamten Form des Gliedes 8.

Die Ausnehmungen 35 ragen in die Vorsprünge 34 so weit hinaus, daß ein umlaufender Randstreifen 38 mit gleichbleibender Breite entsteht. Dadurch erhalten die Ausnehmungen 35 eine etwa glockenförmige Gestalt.

Wie in Figur 3b dargestellt, werden diese Glieder 8 vor dem Aneinanderreihen zu einer topfförmigen Gestalt mit nach innen aufgewölbtem Boden gebogen. Der dem gegenüber dem tiefsten Punkt der Topfform wieder etwas nach oben gewölbte Boden wird dabei durch die Mittelplatte 37 gebildet, während die Stege 36 die Verbindung zu dem nun ringförmigen Randstreifen 38 bilden.

Die so gewölbten topfförmigen Glieder 8 werden entlang ihrer Symmetrieachse aneinandergereiht, wobei jeweils zwei Glieder 8 durch ein Verbindungselement 9 gekoppelt sind.

Die Verbindungselemente 9 bestehen jeweils aus einem - in der Ebene dargestellt - kreuzförmigen Blech, dessen freie Enden 39 sich nach außen hin verbreitern. Dieses Kreuz ist ebenfalls topfförmig gebogen, wobei der Außendurchmesser mindestens um die doppelte Wandstärke der Randstreifen 38 geringer ist als der Außendurchmesser der topfförmig gebogenen Glieder 8.

Diese Verbindungselemente 9 werden mit ihren freien Enden 39 durch die Ausnehmungen 35 im Boden der topfförmigen Glieder 8 geschoben und sind so lang, daß sie sich auch durch die Ausnehmungen 35 des nachfolgenden Gliedes 8 erstrecken. Ein Zurückziehen aus den Ausnehmungen 35 ist nur mit hohem Kraftaufwand möglich, da die freien Enden 39 des Verbindungselementes 9 eine größere Breite besitzen, als es der größten Breite der Ausnehmungen 35 eines in die topfförmige Gestalt gebrachten Gliedes 8 entspricht.

Ein Zusammensetzen der Kette aus einer Abfolge von Verbindungselementen 9 und Gliedern 8 ist beispielsweise dadurch möglich, daß auf die freien Enden 39 des als letztes aus der Kette hervorstehenden Verbindungselementes 9, wie in Figur 3b dargestellt, das nächste Glied 8 aufgeschoben wird, während es sich noch in der ebenen Form befindet, da dann die Ausnehmungen 35 einen größeren maximalen Durchlaß als in der Verbiegung in die topfförmige Gestalt bieten. Nach Aufsetzen dieses unverformten Gliedes 8 wird es in die topfförmige Gestalt gebracht, beispielsweise indem man das verlängerte Ende der Kette durch eine Kalibrieröffnung zieht.

## Patentansprüche

1. Vorrichtung zum Abscheiden von auf Wasser schwimmenden Ölschichten, bestehend aus wenigstens einem Ölskimmer in Form eines endlosen, bandartigen, flexiblen, aus einem oliofilen Material bestehenden Förderelement und einem Abstreifer (4), wobei das Förderelement von einem oberhalb des Öles liegenden Antriebselement in Form einer angetriebenen Walze, die eine zum Transport des endlosen Förderelements geeignete Oberflächenstruktur hat, durch die flüssigen Phasen bewegt wird,
**dadurch gekennzeichnet**, daß
das Förderelement eine aus einem stabilen, in ihrem Querschnitt weitgehend unelastischen Material bestehende Kette (7) ist, die aus im Außenbereich ringförmigen, aneinandergereihten einzelnen Gliedern (8) besteht, die durch innenliegende Verbindungselemente (9) verbunden sind, und deren Außenumfang in abgewickelter Darstellung wellenförmig ausgebildet sind.

2. Vorrichtung nach Anspruch 1,
**dadurch gekennzeichnet,** daß
es sich bei dem Antriebselement um einen Zylinder (10) handelt und der Mitnehmer aus einer in der Mantelfläche des Zylinders (10) umlaufenden Nut (11) besteht, die einen konischen, zum Boden (12) der Nut hin sich verjüngenden Querschnitt aufweist, in der das Förderelement läuft.

3. Vorrichtung nach Anspruch 2,
**dadurch gekennzeichnet,** daß
die Wände (13) der Nut (11) zueinander einen Winkel von 7° bis 15°, vorzugsweise 10°, einschließen und einen solchen Abstand voneinander besitzen, daß die Kette (7) nicht auf dem Boden (12) der Nut (11) aufsitzt, jedoch die lichte Öffnung der Nut größer ist als der Durchmesser der Kette (7).

4. Vorrichtung nach einem der vorhergehenden Ansprüche,
**dadurch gekennzeichnet,** daß
der Abstreifer (4) in Laufrichtung des Förderelementes vor dem Antriebselement angeordnet ist und das Antriebselement einen Durchmesser besitzt, der das 10- bis 20-fache, vorzugsweise das 14-fache, des Durchmessers des Förderelementes beträgt.

5. Vorrichtung nach einem der vorhergehenden Ansprüche,
**dadurch gekennzeichnet,** daß
bei mehreren nebeneinander angeordneten Förderelementen diese so geführt sind, daß die zum Antriebselement aufsteigenden Trume der Förderelemente einen Abstand von mindestens 3 mm zueinander haben.

6. Vorrichtung nach einem der vorhergehenden Ansprüche,
**dadurch gekennzeichnet,** daß
das Förderelement im Bereich des Abstreifers (4) mittels Umlenkelementen (14) in Laufrichtung schräg ansteigend geführt ist, wobei
- sich das erste Umlenkelement (14) innerhalb des Förderelementes und in Laufrichtung vor dem Abstreifer (4) befindet, während sich das zweite Umlenkelement (14) auf der Außenseite des Förderelementes auf der Höhe des Abstreifers (4) befindet,
- es sich bei dem Abstreifer (4) um eine Gummilippe handelt, mit einer Ausnehmung, die dem aus der Nut (11) herausragenden Teil des Querschnittes der Kette (7) entspricht,
- die Umlenkelemente (14)an ihrer mit dem Förderelement in Berührung stehenden Außenfläche bogenförmig gestaltet sind mit einer Krümmung, die nicht kleiner ist als das 10-fache der Durchmessers des Förderelementes.

7. Vorrichtung nach Anspruch 6,
**dadurch gekennzeichnet,** daß
das erste Umlenkelement so montiert ist, daß die vom Förderelement abstrebende, untere Kante (15) in einem Winkel von mindestens 10°, vorzugsweise 20°, schräg nach unten verläuft und oberhalb einer der Ableitung dienenden Rinne (16) endet.

8. Vorrichtung nach einem der vorhergehenden Ansprüche,
**dadurch gekennzeichnet,** daß
die Kette (7) wenigstens an ihrem Außenumfang aus vernickeltem Messing besteht.

9. Vorrichtung nach einem der vorhergehenden Ansprüche,
**dadurch gekennzeichnet,** daß
das Antriebselement mittels eines getakteten Wechselstrommotors ohne Kupplung angetrieben wird, dessen Betriebszeiten im Verhältnis zu den Stillstandszeiten manuell mittels eines Reglers (17) einstellbar sind und wobei die Intervalle im Bereich einiger Minuten liegen.

10. Vorrichtung nach einem der vorhergehenden Ansprüche,
**dadurch gekennzeichnet,** daß
als Abstreifer (4) eine die Kette vollständig umschließende und an deren gesamten Umfang eng anliegende Tülle (18) aus Gummi oder Kunststoff dient.

11. Vorrichtung nach einem der vorhergehenden Ansprüche,
**dadurch gekennzeichnet,** daß
wenigstens der Abstreifer (4), eine Ableitung, das Antriebselement, eine Achse (3), der Motor und der Regler (17) an bzw. in der Grundplatte (21) eines Gehäuses montiert sind, welches mittels Klemmelementen (22) entlang einer senkrechten Stange (23) verstellt und fixiert werden kann, wobei am unteren Ende der Stange (23) ein magnetischer Fuß (24) fest angeordnet ist.

12. Vorrichtung nach einem der vorhergehenden Ansprüche,
**dadurch gekennzeichnet,** daß
in der unteren Schlaufe (25) des Förderelementes zwischen dem aufsteigenden Trum (20) und dem ablaufenden Trum (19) ein Rad (26) in der Schlaufe läuft und von dem Förderelement angetrieben wird, wobei das Rad von der einen Stirnseite zur anderen Stirnseite im wesentlichen offen ist und in diesem Bereich zur Ebene der Stirnseite schrägstehende Leitbleche (27) aufweist, so daß bei der Drehung des Rades eine längs der Achse des Rades (26) laufende Strömung erzeugt wird.

13. Vorrichtung nach Anspruch 12,
**dadurch gekennzeichnet,** daß
von der Achse des Rades (26) ein drehbar gelagertes Gewicht (28) herabhängt.

## Claims

1. Apparatus for separating off oil layers floating in water, composed of at least one oil skimmer in the form of an endless, band-like, flexible conveying element consisting of an oliophilic material, and of a stripper (4), the conveying element being moved through the liquid phases by a drive element which is located above the oil and is in the form of a driven roller which has a surface texture which is suitable for transporting the endless conveying element, characterized in that the conveying element is a stable chain (7) which consists of a cross-sectionally largely non-elastic material and is composed of individual links (8) which are annular in the outer region, are lined up one beside the other, are connected by interior connecting elements (9), and whose outer circumference is of an undulate form in projected development.

2. Apparatus according to Claim 1, characterized in that the drive element is a cylinder (10) and the driver is composed of a groove (11) which runs around in the lateral surface of the cylinder (10) and has a conical cross-section which tapers towards the base (12) of the groove and in which the conveying element runs.

3. Apparatus according to Claim 2, characterized in that the walls (13) of the groove (11) enclose an angle of from 7° to 15°, preferably 10°, with respect to one another and are at such a distance from one another that the chain (7) is not seated on the base (12) of the groove (11), but the clear opening of the groove is greater than the diameter of the chain (7).

4. Apparatus according to one of the preceding claims, characterized in that the stripper (4) is arranged upstream of the drive element, in the running direction of the conveying element, and the drive element has a diameter which is from 10 times to 20 times, preferably 14 times, the diameter of the conveying element.

5. Apparatus according to one of the preceding claims, characterized in that in the event of a plurality of conveying elements being arranged one beside the other, said conveying elements are guided such that the conveying-element strands which rise up to the drive element are spaced apart from one another by at least 3 mm.

6. Apparatus according to one of the preceding claims, characterized in that, in the region of the stripper (4), the conveying element is guided, by means of deflection elements (14), such that it rises obliquely in the running direction,
- the first deflection element (14) being located within the conveying element and upstream of the stripper (4), in the running direction, while the second deflection element (14) is located on the outer side of the conveying element, level with the stripper (4),
- the stripper (4) is a rubber lip, having a cutout which corresponds to that part of the cross-section of the chain (7) which projects out of the groove (11),
- on their outer surface, in contact with the conveying element, the deflection elements (14) are of an arcuate configuration, having a curvature which is not less than 10 times the diameter of the conveying element.

7. Apparatus according to Claim 6, characterized in that the first deflection element is mounted such that the lower edge (15), extending away from the conveying element, runs obliquely downwards at an angle of at least 10°, preferably 20°, and terminates above a channel (16) which serves for discharge purposes.

8. Apparatus according to one of the preceding claims, characterized in that the chain (7) consists, at least on its outer circumference, of nickel-plated brass.

9. Apparatus according to one of the preceding claims, characterized in that the drive element is driven by means of a clocked alternating-current motor, without coupling, whose operating times in relation to the standstill times can be adjusted manually by means of a controller (17), the intervals being in the region of a few minutes.

10. Apparatus according to one of the preceding claims, characterized in that, as the stripper (4), use is made of a rubber or plastic bush (18) which fully encloses the chain and butts closely against the entire circumference thereof.

11. Apparatus according to one of the preceding claims, characterized in that at least the stripper (4), a discharge, the drive element, an axis (3), the motor and the controller (17) are mounted on or in the base plate (21) of a housing which, by means of clamping elements (22), can be adjusted, and fixed, along a vertical rod (23), a magnetic foot (24) being arranged fixedly at the lower end of the rod (23).

12. Apparatus according to one of the preceding claims, characterized in that, in the lower loop (25) of the conveying element between the rising strand (20) and the falling strand (19), a wheel (26) runs in said loop and is driven by the conveying element, the wheel being susbtantially open from one end side to the other end side and exhibiting, in this region, baffles (27) which are inclined with respect to the plane of the end side, with the result that, upon rotation of the wheel, flow running along the axle of the wheel (26) is produced.

13. Apparatus according to Claim 12, characterized in that a rotatably mounted weight (28) hangs down from the axle of the wheel (26).

## Revendications

1. Appareil pour séparer des couches d'huile surnageant sur de l'eau, constitué d'au moins un séparateur d'huile sous la forme d'un élément de transport sans fin, flexible et en forme de bande, réalisé en un matériau oléophile, et d'un élément de raclage (4), l'élément de transport étant déplacé par un élément menant situé au-dessus de l'huile, sous la forme d'un cylindre entraîné, qui présente une structure de surface appropriée pour le transport de l'élément de transport sans fin, à travers les phases liquides,
caractérisé en ce que l'élément de transport est une chaîne (7) réalisée en un matériau stable et largement inélastique dans sa section transversale, qui est constituée de maillons individuels (8) de forme annulaire dans la région extérieure et disposés en rangée les uns par rapport aux autres, qui sont reliés par des éléments de jonction (9) situés à l'intérieur, et dont la périphérie extérieure est réalisée sous une forme ondulée dans une représentation développée.

2. Appareil selon la revendication 1, caractérisé en ce que l'élément menant est un cylindre (10), et en ce que l'élément d'entraînement est constitué par une gorge (11) périphérique dans la surface enveloppe du cylindre (10), qui présente une section transversale conique qui va en se rétrécissant en direction du fond (12) de la gorge, et dans laquelle circule l'élément de transport.

3. Appareil selon la revendication 2, caractérisé en ce que les parois (13) de la gorge (11) enferment l'une par rapport à l'autre un angle de 7 à 15°, de préférence 10°, et ont l'une par rapport à l'autre une telle distance que la chaîne (7) ne repose pas au fond (12) de la gorge (11), mais que l'ouverture libre de la gorge est cependant plus importante que le diamètre de la chaîne (7).

4. Appareil selon l'une des revendications précédentes, caractérisé en ce que l'élément de raclage (4) est agencé devant l'élément d'entraînement, dans la direction de circulation de l'élément de transport, et en ce que l'élément d'entraînement possède un diamètre qui est de 10 à 20 fois, de préférence 14 fois, le diamètre de l'élément de transport.

5. Appareil selon les revendications précédentes, caractérisé en ce que dans le cas de plusieurs éléments de transport agencés les uns à côté des autres, ceux-ci sont guidés de telle manière que les brins des éléments de transport qui montent en direction de l'élément d'entraînement ont une distance d'au moins 3 mm les uns par rapport aux autres.

6. Appareil selon l'une des revendications précédentes, caractérisé en ce que, dans la région de l'élément de raclage (4), l'élément de transport est guidé en montant en oblique dans la direction de circulation, au moyen d'éléments de renvoi (14), et dans lequel
- le premier élément de renvoi (14) est situé à l'intérieur de l'élément de transport et devant l'élément de raclage (4) en direction de circulation, tandis que le second élément de renvoi (14) est situé sur le côté extérieur de l'élément de transport et à la hauteur de l'élément de raclage (4),
- l'élément de raclage (4) est une lèvre en caoutchouc avec un évidement qui correspond à la partie de la section transversale de la chaîne (7) qui dépasse hors de la gorge (11), et
- les éléments de renvoi (14) sont réalisés sous une forme arquée au niveau de leur surface extérieure qui est en contact avec l'élément de transport, avec une courbure qui n'est pas inférieure à 10 fois le diamètre de l'élément de transport.

7. Appareil selon la revendication 6, caractérisé en ce que le premier élément de renvoi est monté de telle façon que la bordure inférieure (15) qui va en s'éloignant de l'élément de transport s'étend sous un angle d'au moins 10°, de préférence 20°, en oblique vers le bas, et se termine au-dessus d'une goulotte (16) qui sert à l'évacuation.

8. Appareil selon l'une des revendications précédentes, caractérisé en ce que la chaîne (7) est réalisée en laiton nickelé, au moins à sa périphérie extérieure.

9. Appareil selon l'une des revendications précédentes, caractérisé en ce que l'élément d'entraînement est entraîné sans accouplement au moyen d'un moteur synchrone à courant alternatif, dont les durées de fonctionnement peuvent être réglés par rapport aux durées de repos manuellement au moyen d'un régulateur (17), et les intervalles étant de l'ordre de quelques minutes.

10. Appareil selon l'une des revendications précédentes, caractérisé en ce que l'on utilise en tant qu'élément de raclage (4) une douille (18) en caoutchouc ou en matière plastique qui entoure entièrement la chaîne et qui est appliquée étroitement contre la périphérie totale de celle-ci.

11. Appareil selon l'une des revendications précédentes, caractérisé en ce qu'au moins l'élément de raclage (4), une conduite d'évacuation, l'élément d'entraînement, un axe (3), le moteur et le régulateur (17) sont montés sur ou dans la plaque de base (21) d'un boîtier qui peut être fixé et déplacé le long d'une tige verticale (23), au moyen d'éléments de serrage (22), et en ce qu'un pied magnétique (24) est agencé fixement à l'extrémité inférieure de la tige (23).

12. Appareil selon l'une des revendications précédentes, caractérisé en ce qu'une roue (26) circule dans la boucle inférieure (25) de l'élément de transport entre le brin montant (20) et le brin descendant (19), cette roue étant entraînée par l'élément de transport, et en ce que la roue est sensiblement ouverte depuis un côté frontal jusqu'à l'autre côté frontal et présente dans cette région des plaques de guidage (27) disposées en oblique par rapport au plan des faces frontales, de sorte qu'il se produit un écoulement le long de l'axe de la roue (26) lors de la rotation de la roue.

13. Appareil selon la revendication 12, caractérisé en ce qu'il est prévu un poids (28) monté en rotation, en suspension par rapport à l'axe de la roue (26).
